# EUROPÄISCHE PATENTSCHRIFT

(11) **EP 0 419 701 B1**
(45) Veröffentlichungstag und Bekanntmachung des Hinweises auf die Patenterteilung: **09.06.1993**
(21) Anmeldenummer: 89117891.5
(22) Anmeldetag: 27.09.1989
(51) Int. Cl.: G01D 5/38, G01D 5/34

(54) **Winkelmesseinrichtung**
Angle-measuring device
Dispositif pour la mesure d'angles

(43) Veröffentlichungstag der Anmeldung: 03.04.1991
(73) Patentinhaber: Dr. Johannes Heidenhain GmbH, D-83292 Traunreut (DE)
(72) Erfinder: Brandl, Sebastian, Dipl.-Ing.(FH), D-8226 Altenmarkt (DE)

(56) Entgegenhaltungen:
- EP-A- 0 262 349
- CH-A- 488 167
- "Dreigitterschrittgeber", Dissertation von Jörg Willhelm, 1978, Seiten 47-58,75-92, TU, Hannover, DE
- MACHINE MODERNE, Band 60, Nr. 693, Dezember 1966, Seiten 61-66; L. RABIAN: "Fotomat" Commande numérique pour machines-outils de précision

## Beschreibung

Die Erfindung bezieht sich auf eine lichtelektrische Winkelmeßeinrichtung nach dem Oberbegriff des Anspruches 1.

Derartige Winkelmeßeinrichtungen sind aus einer Vielzahl von Druckschriften bekannt. Als zutreffendste sei von der DE-OS 36 33 574 ausgegangen, in der Winkelmeßeinrichtungen beschrieben sind, bei denen der Exzentrizitätsfehler durch diametrale Abtastung einer Gitterteilung kompensiert wird. Eines der Ausführungsbeispiele zeigt ein radial zur Gitterteilung angeordnetes Prisma zur Umlenkung der positiven und negativen Beugungsstrahlen. Zur Gewinnung der Meßsignale werden nach dem zweiten Durchtritt der Beugungsstrahlen durch die Gitterteilung Interferenzen der positiven und der negativen Beugungsstrahlen einer Ordnung ausgewertet. Daher nennt man derartige Winkelmeßeinrichtungen auch "Zweigittergeber".

Als Beleuchtungsquelle dient eine Laserlichtquelle.

Der vorliegenden Erfindung liegt die Aufgabe zugrunde, eine einfach aufgebaute Winkelmeßeinrichtung zu schaffen, die nach dem sogenannten "Dreigittergeber-Prinzip" arbeitet (s. Dissertation von Jörg Willhelm, TU Hannover, 1978 "Dreigitterschrittgeber"). Es soll eine hohe Intensität, also ein hoher Wirkungsgrad erreicht werden. Diese Aufgabe wird von einer Winkelmeßeinrichtung mit den Merkmalen des Anspruches 1 gelost.

Die Erfindung bietet folgende Vorteile:
1. Durchmesserabtastung (interferometrisch),
   dadurch Vervierfachung der Signale;
   die Genauigkeit wird durch optische Kompensation der Dezentrierung verbessert.
2. Durchlichtanordnung,
   ausreichende Intensität.
3. Einfache Anordnung der Komponenten.

Mit Hilfe von Ausführungsbeispielen wird die Erfindung anhand der Zeichnungen noch näher erläutert.

Es zeigt
- Figur 1: eine Winkelmeßeinrichtung in einer Schema-Draufsicht;
- Figur 2: eine Seitenansicht des Schnittes II/II;
- Figur 3: eine Seitenansicht des Schnittes III/III;
- Figur 4: ein Umlenkprisma mit Strahlengang, gestreckt;
- Figur 5: eine Seitenansicht von Figur 4, ungestreckt und
- Figur 6: einen aufgefalteten Strahlengang.

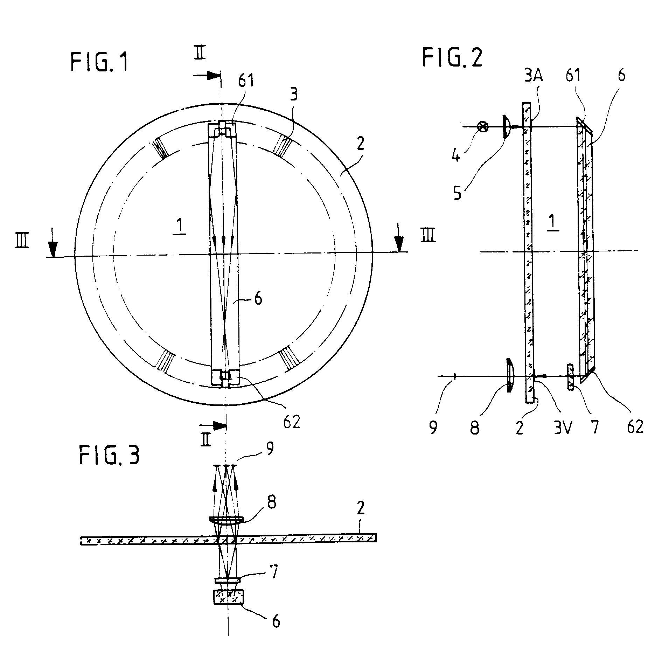

Eine in den Figuren 1 bis 3 dargestellte Winkelmeßeinrichtung 1 weist eine Teilscheibe 2 mit einer Gitterteilung 3 auf. Von einer Lichtquelle 4 - die ein Laser sein kann, aber nicht sein muß - ausgehendes Licht wird von einem Kondensor 5 kollimiert und durchstrahlt die Teilscheibe 2. Die Gitterteilung 3 wirkt in diesem Bereich als Aufspaltungsgitter 3A und beugt das Licht in die +1. und -1. Beugungsordnung (die anderen Beugungsordnungen werden bis auf die 0. Beugungsordnung vernachlässigt).

Ein Umlenkprisma 6 liegt in einer parallelen Ebene zur Teilscheibe 2 und leitet die gebeugten Teilstrahlenbundel +1., 0., -1. zu einem Bereich der Teilscheibe 2, der dem Aufspaltungsgitter 3A diametral gegenüber liegt. Bevor die Teilstrahlenbündel +1., 0., -1. wieder auf die Teilscheibe 2 treffen, durchlaufen sie ein Indexgitter 7, an welchem sie nochmals gebeugt werden. Die nochmals gebeugten Teilstrahlenbündel interferieren nach Eintritt in die Gitterteilung 3, die in diesem Bereich als Vereinigungsgitter 3V wirkt. Ein nachgeordneter weiterer Kondensor 8 fokussiert die interferierenden Teilstrahlenbündel auf Detektoren 9, die die Umwandlung in zueinander phasenverschobene Signale vornehmen.

Im Gegensatz zum eingangs genannten Stand der Technik werden im Umlenkprisma 6 die gebeugten Teilstrahlenbündel +1., -1. nur einmal umgelenkt, so daß die +1. und die -1. Ordnung "vertauscht" aus dem Umlenkprisma 6 austreten. Das soll heißen, daß die Richtung der Teilstrahlenbündel +1. und -1. geändert wird. Beim Stand der Technik treten die Teilstrahlenbündel unter dem gleichen Winkel aus dem Umlenkprisma aus, unter dem sie dort eintreten.

Bei der Erfindung tritt die +1. Ordnung unter einem Winkel aus dem Umlenkprisma 6 aus, unter dem die -1. Ordnung dort eintritt. Die -1. Ordnung tritt hingegen unter dem Winkel aus dem Umlenkprisma 6 aus, unter dem die +1. Ordnung dort eintritt.

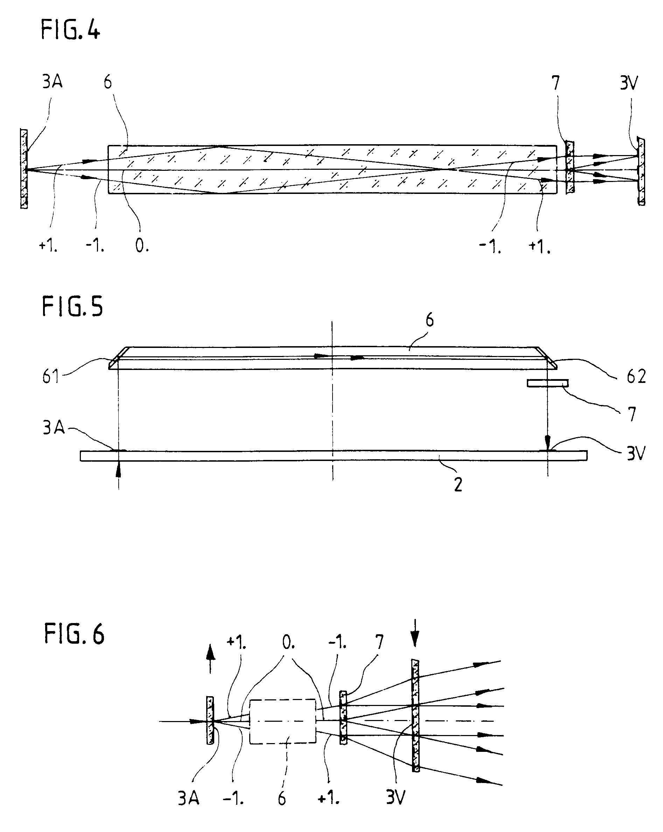

Dieser Sachverhalt wird aus Figur 4 und auch aus Figur 6 deutlich.

Das Umlenkprisma 6 weist eine weitere Besonderheit auf, mit deren Hilfe die unterschiedlichen optischen Weglängen der 0. Beugungsordnung und der gebeugten +1. und-1. Beugungsordnungen ausgeglichen werden. Zu diesem Zweck sind die stirnseitigen Reflektionsflächen 61 und 62 des Umlenkprismas 6 abgestuft. Die Abstufung der Reflektionsflächen 61 und 62 hat zur Folge, daß im Umlenkprisma 6 die 0. und die+1. und -1. Beugungsordnung gleichlange Wege zurücklegen müssen.

Zwischen dem Austritt der Teilstrahlenbündel aus dem Umlenkprisma 6 und dem zweiten Durchtritt durch die Teilscheibe 2 ist ein weiteres Indexgitter 7 vorgesehen. Am Indexgitter 7 - auch als Ablenkgitter bezeichnet - werden die Teilstrahlenbündel erneut gebeugt und nach dem Eintritt in das dritte Gitter, das als Vereinigungsgitter 3V bezeichnet ist, zur Interferenz miteinander gebracht.

Die Gitter 3 und 7 sind als Phasengitter ausgebildet, deren Stege-/Furchenbreiten-Verhältnis von 1:1 abweicht.

Prinzipiell kann das Index-Gitter 7 auch dem zweiten Durchtrittsbereich 3V der Gitterteilung 3 nachgeschaltet werden.

Die geometrische Anordnung der Gitter und deren Gitterparameter wählt der Fachmann den Erfordernissen entsprechend.

Durch die Erfindung wird eine Winkelmeßeinrichtung des Dreigitter-Types im Durchlichtverfahren geschaffen, deren Wirkungsgrad relativ hoch ist, da die Teilstrahlenbündel eine hohe Intensität aufweisen. Die eingangs bereits aufgeführten Vorteile bleiben trotz des einfachen Aufbaus erhalten und es ist nicht unbedingt eine monochromatische Lichtquelle erforderlich.

## Patentansprüche

1. Lichtelektrische Winkelmeßeinrichtung (1) zur Messung der Relativlage zweier zueinander drehbarer Objekte, bei der eine Winkel-Gitterteilung (3) einer mit dem einen Objekt verbundenen Teilscheibe (2) an wenigstens zwei diametral gegenüberliegenden Gitter-Abtastbereichen (3A, 3V) von einer mit dem anderen Objekt verbundenen Abtasteinrichtung mittels Lichtstrahlbeugung abgetastet wird, wobei Teil-Strahlenbündel durch ein Umlenkprisma (6) von einem Gitter-Abtastbereich (3A) auf den diametral gegenüberliegenden Gitter-Abtastbereich (3V) gerichtet werden und die Abtasteinrichtung Photodetektoren (9) zum Erfassen von interferierenden Teil-Strahlenbündeln aufweist, dadurch gekennzeichnet, daß im Strahlengang der Teilstrahlenbündel ein drittes Gitter (7) angeordnet ist, und daß die gebeugten Teilstrahlenbündel +1. und -1. Ordnung im Umlenkprisma (6) mit einer ungradzahligen Anzahl von Umlenkungen umgelenkt werden.

2. Lichtelektrische Winkelmeßeinrichtung nach Anspruch 1, dadurch gekennzeichnet, daß Mittel (6) vorgesehen sind, mit denen die optischen Weglängen der Teilstrahlenbündel einander angeglichen werden.

3. Lichtelektrische Winkelmeßeinrichtung nach Anspruch 2, dadurch gekennzeichnet, daß die Mittel durch stufenartige Ausbildung der stirnseitigen Reflexionsflächen (61,62) des Umlenkprismas (6) gebildet werden.

4. Lichtelektrische Winkelmeßeinrichtung nach Anspruch 1, dadurch gekennzeichnet, daß das dritte Gitter (7) zwischen dem Umlenkprisma (6) und dem zweiten Gitter-Abtastbereich (3V) angeordnet ist.

5. Lichtelektrische Winkelmeßeinrichtung nach Anspruch 1, dadurch gekennzeichnet, daß das dritte Gitter (7) dem zweiten Gitter-Abtastbereich (3V) nachgeordnet ist.

6. Lichtelektrische Winkelmeßeinrichtung nach Anspruch 1, dadurch gekennzeichnet, daß die Gitter (3,7) als Phasengitter ausgebildet sind.

7. Lichtelektrische Winkelmeßeinrichtung nach Anspruch 6, dadurch gekennzeichnet, daß die Phasengitter (3,7) ein von 1:1 abweichendes Stege-/Furchenbreiten-Verhältnis aufweisen.

## Claims

1. Photoelectric angle measuring device (1) for measuring the relative position of two relatively rotatable objects, in which an angular grid scale (3) of an index disc (2) connected to one object is scanned at at least two diametrically opposed grid scanning regions (3A, 3V) by a scanning device connected to the other object by light beam diffraction, wherein partial beams are directed by a deflecting prism (6) from one grid scanning region (3A) onto the diametrically opposed grid scanning region (3V) and the scanning device comprises photodetectors (9) for detecting interfering partial beams, characterised in that a third grid (7) is arranged in the path of the partial beams and in that the diffracted partial beams or degree +1 and -1 are deflected in the deflecting prism (6) with an uneven number of deflections.

2. Photoelectric angle measuring device according to claim 1, characterised in that means (6) are provided with which the optical path lengths of the partial beams are adjusted to each other.

3. Photoelectric angle measuring device according to claim 2, characterised in that the means are formed by step-like construction of the front reflection surfaces (61, 62) of the deflecting prism (6).

4. Photoelectric angle measuring device according to claim 1, characterised in that the third grid (7) is arranged between the deflecting prism (6) and the second grid scanning region (3V).

5. Photoelectric angle measuring device according to claim 1, characterised in that the third grid (7) is arranged behind the second grid scanning region (3V).

6. Photoelectric angle measuring device according to claim 1, characterised in that the grids (3, 7) are constructed as phase grids.

7. Photoelectric angle measuring device according to claim 6, characterised in that the phase grids (3, 7) have a web-to-slot width ratio other than 1:1.

## Revendications

1. Dispositif de mesure d'angle (1) photo-électrique pour la mesure de la position relative de deux objets pouvant tourner l'un par rapport à l'autre, dans lequel une graduation angulaire (3) en réseau d'un disque gradué (2) lié à l'un des objets est lue par diffraction de rayons lumineux, en au moins deux zones de lecture (3A, 3V) en réseau diamétralement opposées, par un dispositif de lecture lié à l'autre objet, des faisceaux partiels de rayons étant dirigés par un prisme déviateur (6) d'une zone de lecture (3A) en réseau sur la zone de lecture (3V) en réseau diamétralement opposée et le dispositif de lecture comportant des cellules (9) photo-électriques destinées à détecter des faisceaux de rayons partiels en interférence, caractérisé par le fait qu'un troisième réseau (7) est placé sur le trajet des faisceaux de rayons partiels et par le fait que les faisceaux partiels de rayons diffractés d'ordre +1 et -1 subissent un nombre impair de déviations dans le prisme déviateur (6).

2. Dispositif de mesure d'angle photo-électrique selon la revendication 1, caractérisé par le fait qu'il est prévu des moyens (6) permettant d'équilibrer entre elles les longueurs des trajets optiques des faisceaux partiels de rayons.

3. Dispositif de mesure d'angle photo-électrique selon la revendication 2, caractérisé par le fait que les moyens sont constitués par une structure en gradins des surfaces de réflexion (61, 62) frontales du prisme déviateur (6).

4. Dispositif de mesure d'angle photo-électrique selon la revendication 1, caractérisé par le fait que le troisième réseau (7) est disposé entre le prisme déviateur (6) et la deuxième zone de lecture (3V) en réseau.

5. Dispositif de mesure d'angle photo-électrique selon la revendication 1, caractérisé par le fait que le troisième réseau (7) est disposé à la suite de la deuxième zone de lecture (3V) en réseau.

6. Dispositif de mesure d'angle photo-électrique selon la revendication 1, caractérisé par le fait que les réseaux (3, 7) sont agencés sous forme de réseaux de phase.

7. Dispositif de mesure d'angle photo-électrique selon la revendication 6, caractérisé par le fait que les réseaux de phase (3, 7) présentent un rapport barrette/sillon différent de 1:1.
